# EUROPEAN PATENT APPLICATION

(11) **EP 2 388 123 A1**
(43) Date of publication of application: **23.11.2011**
(21) Application number: 10382133.6
(22) Date of filing: 21.05.2010
(51) Int. Cl.: B29C 45/14

(54) **Method and device for overmolding of metal parts**

(71) Applicant: Cie Automotive, S.A., 48011 Bilbao (Vizcaya) (ES)
(72) Inventor: Loizaga Urbistondo, Iñigo, 48011 Bilbao (Vizcaya) (ES); Gabiola Idoyaga, Gotzon, 48011 Bilbao (Vizcaya) (ES)
(74) Representative: Carpintero Lopez, Francisco

(57) **Abstract**

The invention relates to a method and device for obtaining parts and part obtained by means of said method, which comprises:
- placing sheet metal (4) in an open injection mold (1) comprising a fixed portion (2) and a mobile portion (3) which are separated,
- closing the injection mold (1), causing the shaping of the sheet metal (4),
- creating a free space (7) in contact with the sheet metal (4) by means of the separation of a movable element (5) of the injection mold (1), and
- injecting a plastic material into said space (7) through an injection channel (8) of the injection mold (1), an end part (9) of shaped sheet metal comprising at least one overmolded portion (10) with a plastic material being obtained.

## Description

### Technical Field of the Invention

The present invention relates to a method and to a device for obtaining parts, specifically shaped metal parts in which the incorporation of a portion of plastic material by means of overmolding is required; likewise a third aspect of the invention relates to a part obtained by means of said method.

The method, device and part proposed by the invention is applicable in the industry of manufacturing complex parts, and more specifically in the field of parts and components for the automotive industry.

### Background of the Invention

Currently, especially in the field of the industry of components and parts for manufacturing automotive vehicles, it is necessary to obtain complex parts which, on one hand, have the sufficient mechanical rigidity while at the same time they offer an aesthetically optimal surface finish for their incorporation in an automotive vehicle. On the other hand, it is also necessary to obtain metal parts in which an area of said part is required to incorporate an additional portion of a material which is less rigid than and not as hard as metal, such as a plastic material, for the purpose of increasing the rigidity of the part without increasing its weight excessively, as well as adding to the end product functions which would not be possible with other technologies, or in any case would be more expensive, which allows reducing costs.

These parts are usually formed from sheet metal which is shaped by means of press forming or folding until achieving a required or target shape therein, in order to subsequently, in other different equipment, be coated with a plastic material by means of plastic injection overmolding in the areas which are to be coated.

The main drawback of this way of obtaining the aforementioned parts is that having different pieces of equipment for manufacturing the parts is required, with the consequent inconvenience involved in the need to store and transport parts between pieces of equipment, in addition to the time and the cost that all this entails.

For the purpose of at least partially solving the previous problems, there are means, such as those described in European patent application number EP-0792734-A2, for adhering a plastic covering layer in a part also made of plastic material obtained by injection, this technique being known as the lining of a material. The method described in this document is specifically focused on folding a covering layer without needing additional adhesion means, such that said covering layer is folded around an edge of an injected part, which is back-injection molded, all this without needing any additional operation after removing the molded part from the molding machine.

Nevertheless, in the event that the part to be coated is not obtained by plastic injection, such as in the case initially mentioned, for example, in which the incorporation of a plastic portion in a shaped metal part is required, there are no effective means which allow obtaining said complex parts quickly and at a lower cost than at present.

### Description of the Invention

A first aspect of the present invention relates to a method for obtaining parts, which allows obtaining a complex part of sheet metal shaped by means of press forming, for example, incorporating a portion of injected plastic material, all of this quickly and at a lower cost than at present.

The method proposed by the invention comprises the following sequential steps:
A step a) which comprises placing sheet metal in an injection mold of an injection machine, in which said injection mold comprises a fixed portion and a mobile portion which can move operated by a hydraulic or pneumatic piston, usually referred to as closing piston, of the injection machine, in which said fixed and mobile portions are separated such that the injection mold is open.

When the injection mold is open, sheet metal to be shaped is placed therein, either manually or by means of a robot. The sheet metal is secured in said position by means of any conventional securing means, such as for example by means of magnetic supports or mechanical securing means, for example. The fixed portion of the injection mold is usually attached to the frame of the injection machine itself, also referred to as injector.

A step b) which comprises closing the injection mold by means of moving the mobile portion closer to the fixed portion, causing the shaping of the sheet metal. When the hydraulic closing piston of the injection machine is operated, the injection mold is closed and the sheet metal is shaped, such that the sheet metal is trapped inside the injection mold with a certain folding depending on the shape of the fixed and mobile portions of the injection mold, also referred to as mold and countermold; i.e., during this step b) of shaping, the sheet metal gradually adopts the shape due to the design of the mold itself.

According to the invention, the method additionally comprises the following sequential steps:
A step e) which comprise creating or providing at least one free space, empty like a cavity, which is in contact with a face of the sheet metal. Said space is created by means of the separation with respect to the sheet metal of at least one movable element comprised in the injection mold.

According to a preferred embodiment of the invention, the movable elements are operated by hydraulic pistons such that said movable elements are moved away or withdrawn a certain distance to leave room, provide or create the space provided for the entrance and subsequent filling with a plastic material by means of injection. The movable elements can be located both in the fixed portion and in the mobile portion of the injection mold, preferably internally thereto, such that when step b) is performed the inner face of said movable elements is in contact with the sheet metal.

To allow the plastic material to overmold the sheet metal, the movable elements are moved away or withdrawn, no longer being in direct contact with said sheet metal which, however, is still retained between the fixed and mobile portions.

The movable elements are separated from the sheet metal an exact distance determining the thickness of the portion of plastic material which is subsequently injected to form the part.

Likewise, as has been mentioned, the method comprises a step f) which comprises injecting a plastic material into said at least one space through an injection channel comprised in the injection mold, an end part of shaped sheet metal comprising at least one overmolded portion with a plastic material being obtained.

Thus, the main advantage of the method of the invention is that the end part is obtained by means of a series of minimum steps which can be carried out in a single device, i.e., the injection mold allows shaping or press forming the sheet metal when it is closed and then using the injection mold itself to overmold with the plastic material certain portions of the sheet metal previously shaped and folded, without needing intermediate handling between said two shaping and overmolding operations, with the consequent time and money saving that this entails.

The possibility is contemplated that after step b) and before step e), the method of the invention comprises a step c) which comprises folding at least one area of the sheet metal, preferably a perimetric area of the sheet metal, by means of the action of at least one movable element.

Thus, by means of the action of the movable elements, in this case acting against the sheet metal, additional folds are achieved in certain areas of the sheet metal which had not been shaped in step b), such as a partial bending in the perimetric areas of the sheet metal, for example, all of this while the sheet metal is still secured between the fixed portion and the mobile portion of the injection mold, until achieving the final shape required in the sheet metal for obtaining an end part.

Obviously, according to a preferred embodiment of the invention, after step f), the method comprises a step g) which comprises opening the injection mold by means of operating the hydraulic closing piston of the injection machine, in order to then, in a step h), expel the end part already obtained from the injection mold, for example by any conventional means such as by the thrust of a movable element, by means of expelling rods, or any other equivalent means.

A second aspect of the invention relates to a device for obtaining parts, in which to perform the method of the invention, for which the device comprises an injection machine comprising an injection mold.

Said injection mold comprises a fixed portion and a mobile portion which can be moved operated by a hydraulic closing piston of the injection machine. When the injection mold is open the fixed and mobile portions are separated, whereas when the injection mold is closed, the shaping, i.e., press forming of sheet metal located between said fixed and mobile portions can occur by means of moving them closer together.

According to the invention, the injection mold comprises at least one movable element, preferably operated by a hydraulic or pneumatic piston. Said movable element can be separated with respect to the shaped sheet metal, creating at least one free space, empty like a cavity, in contact with a face of said sheet metal.

The injection mold comprises at least one injection channel through which a plastic material can be injected into said at least one space, an end part of shaped sheet metal comprising at least one overmolded portion with a plastic material being obtained.

Finally, a third aspect of the invention relates to a part obtained by means of the method described above, such that said end part is made of shaped sheet metal and comprises at least one overmolded portion with a plastic material.

### Description of the Drawings

To complement the description which is being made and for the purpose of aiding to better understand the features of the invention according to a preferred practical embodiment thereof, a set of drawings is attached as an integral part of said description, in which the following has been depicted with an illustrative and non-limiting character:
Figure 1 shows a schematic view, according to a longitudinal section, of a preferred embodiment of the device for obtaining parts proposed by the invention, also depicting step a) of the method of the invention.
Figure 2 shows a schematic view like that of the previous figure, in which step b) of the method has been depicted.
Figures 3 and 4 show two schematic views like those of the previous figures, in which step c) of a preferred embodiment of the method has been depicted, the movable elements acting against the sheet metal having been depicted in Figure 3 and the movable elements separated or withdrawn from the sheet metal having been depicted in Figure 4.
Figures 5 and 6 show two schematic views like those of the previous figures, in which step d) of a preferred embodiment of the method has been depicted, the movable elements acting against the ends of the sheet metal having been depicted in Figure 5 and the movable elements having been depicted separated or withdrawn from the sheet metal having been depicted in Figure 6.
Figure 7 shows a schematic view like those of the previous figures, in which step e) of the method has been depicted.
Figure 8 shows a schematic view like those of the previous figures, in which step f) of the method has been depicted.
Figure 9 shows a schematic view like those of the previous figures, in which step g) of a preferred embodiment of the method has been depicted.
Figures 10 and 11 show two schematic views like those of the previous figures, in which step h) of a preferred embodiment of the method has been depicted, a first phase of expulsion of the part by means of a movable element having been depicted in Figure 10 and a second phase of expulsion having been depicted in Figure 11, in which the movable element is retracted, the finished part being released from the device.
Figure 12 shows a perspective view of an embodiment of a part obtained according to the method of the invention.

### Preferred Embodiment of the Invention

In view of the mentioned figures, it can be observed how in one of the possible embodiments of the invention the method for obtaining parts proposed by the invention comprises the following sequential steps:

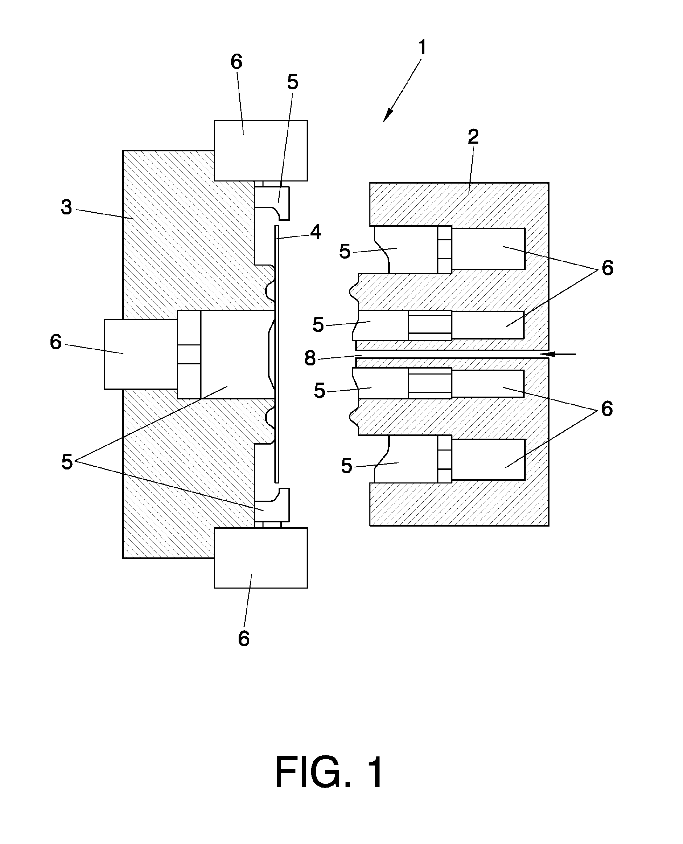

Figure 1 depicts a step a) of the method, which comprises placing sheet metal (4) in an injection mold (1) of an injection machine. The injection mold (1) comprises a fixed portion (2) and a mobile portion (3) which can move operated by a hydraulic closing piston of the injection machine, not depicted. When the injection mold (1) is open, as in the depicted case, the fixed portion (2) and mobile portion (3) are separated.

Thus, with the injection mold (1) thus open, the sheet metal (4) to be shaped is placed therein, for which a robot can be used. The sheet metal (4) is secured in said position by means of securing means which preferably consists of magnetic supports. The fixed portion (2) of the injection mold (1) is in turn attached to the frame of the injection machine itself, also referred to as injector.

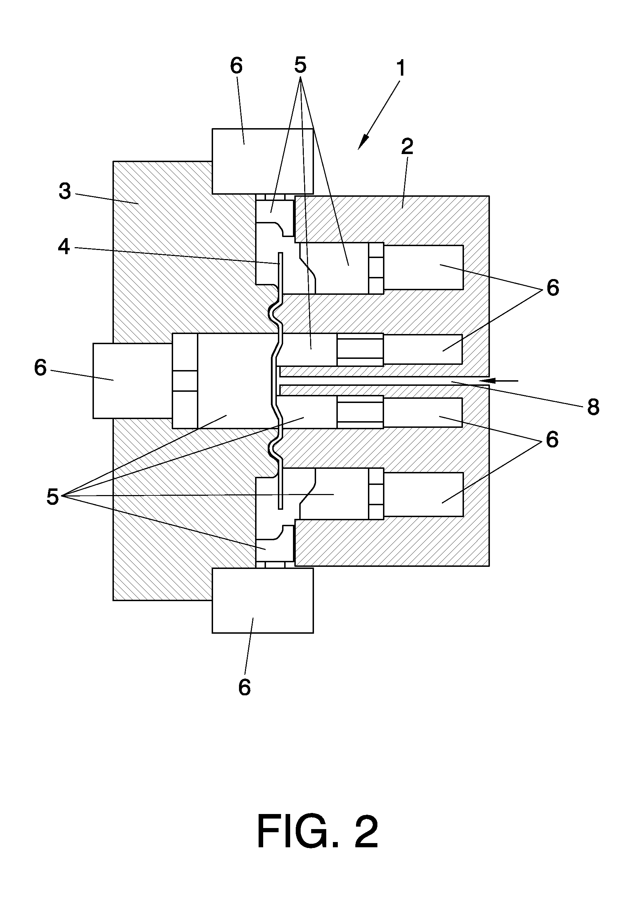

Figure 2 depicts a step b) of the method, which comprises closing the injection mold (1) by means of moving the mobile portion (3) closer to the fixed portion (2), causing the shaping of the sheet metal (4). When the hydraulic closing piston of the injection machine is operated, the injection mold (1) is closed and the sheet metal (4) is shaped, being trapped inside the injection mold (1) with a certain folding depending on the shape of the fixed portion (2) and mobile portion (3) of the injection mold (1), such that the sheet metal (4) gradually adopts the shaped due to the design of the mold itself.

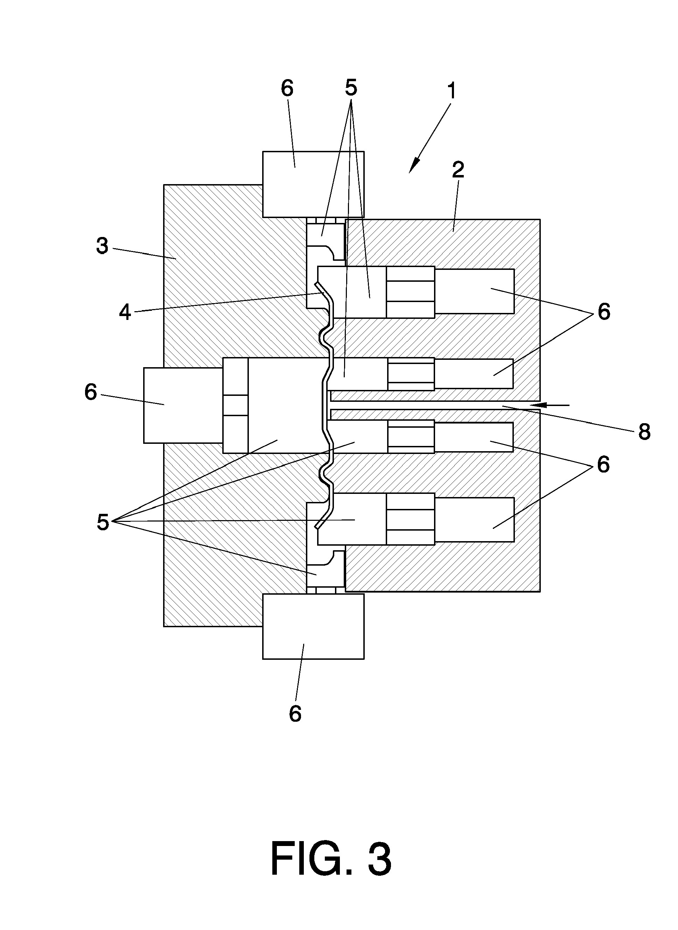

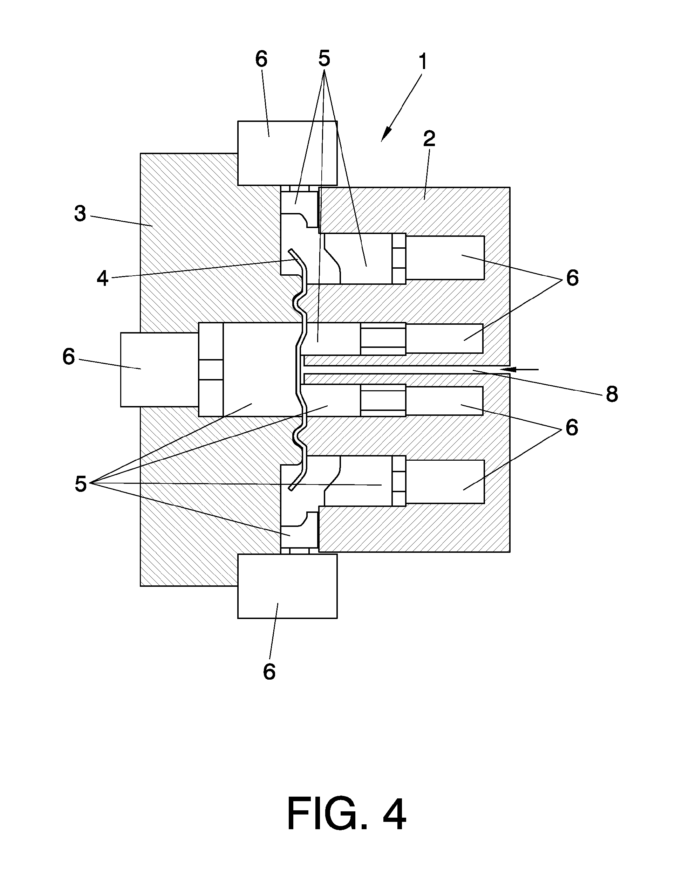

As has been depicted in Figures 3 and 4, after step b) and before step e), the method comprises a step c) which comprises partially folding a perimetric area of the sheet metal (4) by means of the action of two movable elements (5) operated by hydraulic pistons (6) comprised in the fixed portion (2) of the injection mold and which act frontally to the sheet metal (4), after which they are withdrawn or retracted.

Thus, by means of the action of the movable elements (5), in this case acting against the sheet metal (4), additional folds are achieved in certain areas of the sheet metal (4) which had not been shaped in step b), such as a partial bending in the perimetric areas of the sheet metal (4), for example, all of this while the sheet metal (4) is still secured between the fixed portion (2) and the mobile portion (3) of the injection mold (1), until achieving the approximation to the final shape required in the sheet metal (4) for obtaining an end part (9).

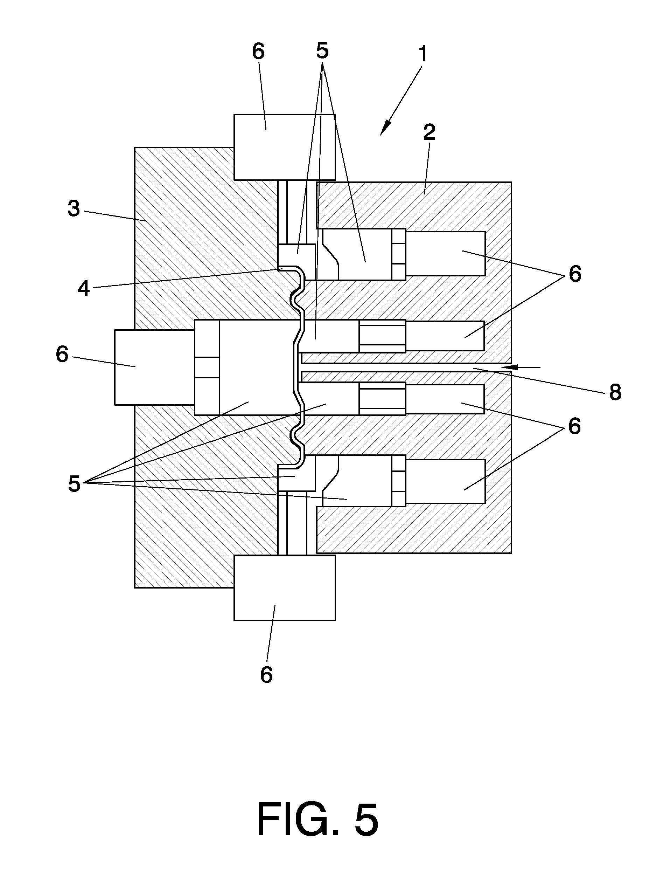

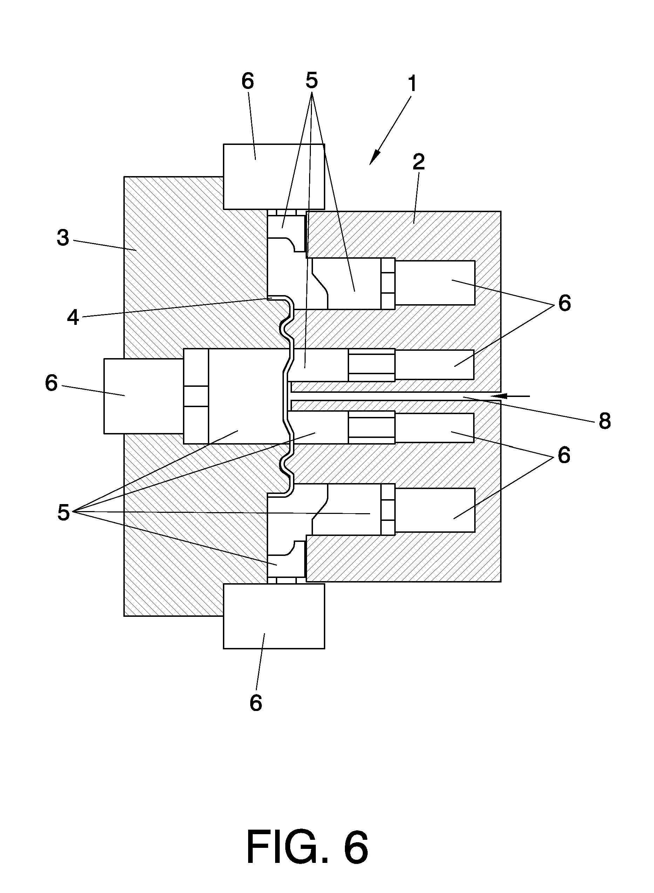

Next, Figures 5 and 6 depict a step d) which comprises the action of movable elements (5) acting transversely on the perimetric area of the sheet metal (4) partially bent in the previous step, causing its final shaping, after which they are withdrawn. Thus, during steps c) and d) of folding, the sheet metal (4) gradually adopts the shape due to making additional folds, by means of the collaboration of the movable elements (5).

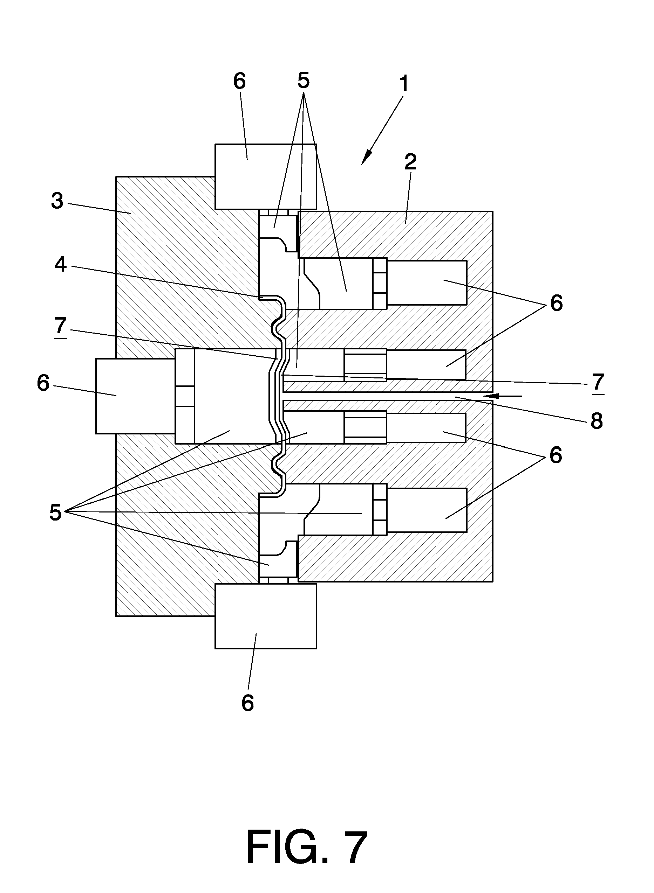

Figure 7 depicts a step e) of the method, which comprises creating a centered space (7) which is in contact with a face of the sheet metal (4). Said space (7) is created by means of the separation with respect to the sheet metal (4) of two central movable elements (5) comprised in the injection mold (1), specifically in the fixed portion (2) thereof.

As has been mentioned above, all the movable elements (5) are operated by hydraulic pistons (6), such that said movable elements (5) are moved away or withdrawn a certain distance to create the space (7) provided for being subsequently filled with a plastic material by means of injection.

As can be seen in the figures, the movable elements (5) can be located both in the fixed portion (2) and in the mobile portion (3) of the injection mold (1), preferably internally thereto.

To allow the plastic material to overmold the sheet metal (4), the movable elements (5) are moved away or withdrawn, no longer being in direct contact with said sheet metal (4) which, however, is still retained between the fixed portion (2) and the mobile portion (3).

The movable elements (5) are separated from the sheet metal (4) an exact distance determining the thickness of the portion of plastic material which is subsequently injected to form the end part (9). As the position of these movable elements (5) is very important, the hydraulic pistons (6) comprise locking means, which can consist of locking means integrated in the hydraulic pistons (6) themselves or consist of hydraulic pistons (6) which in turn have a secondary piston causing the locking of the position thereof.

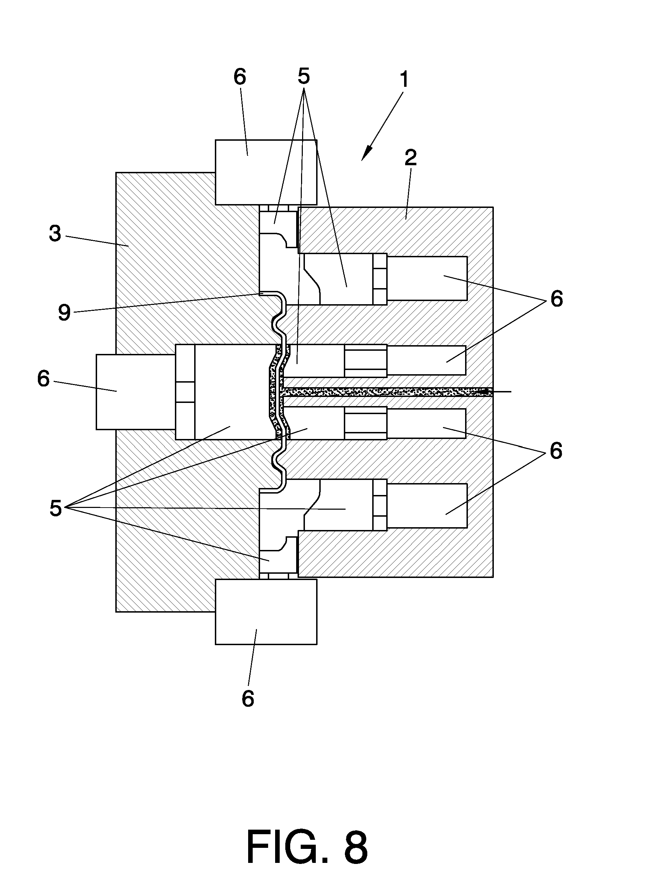

Figure 8 illustrates a step f) of the method, which comprises injecting a plastic material into the space (7) through an injection channel (8) comprised in the injection mold (1), an end part (9) of shaped sheet metal comprising at least one overmolded portion (10) with a plastic material being obtained. In other words, plastic material is injected inside the injection mold (1) by means of the injection channel (8), which can be a cold channel or a hot channel, such that the space (7) is filled with plastic material, overmolding the sheet metal (4).

The method of the invention is independent of the particular features and shape of the end part (9) to be obtained.

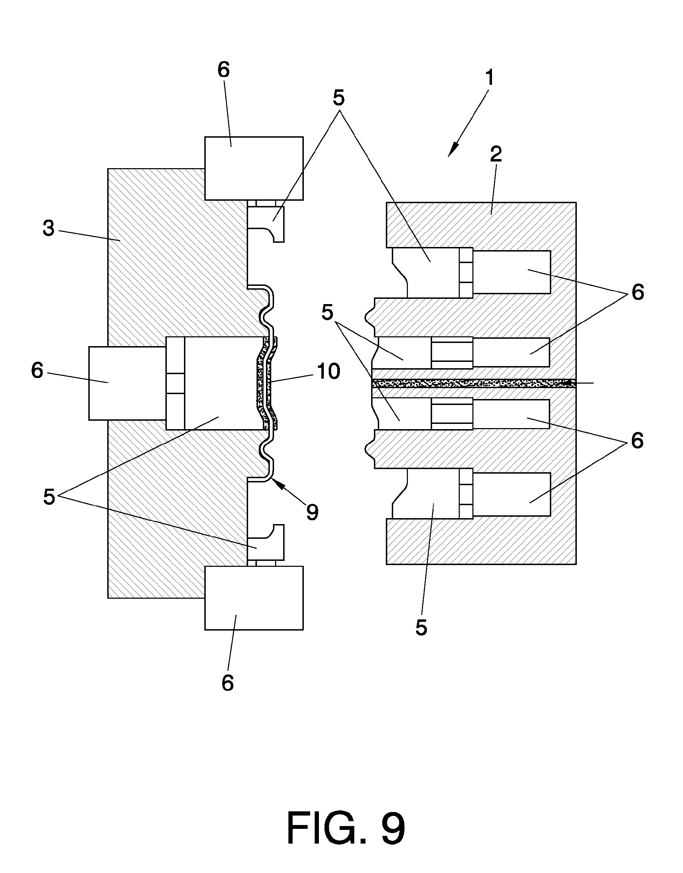

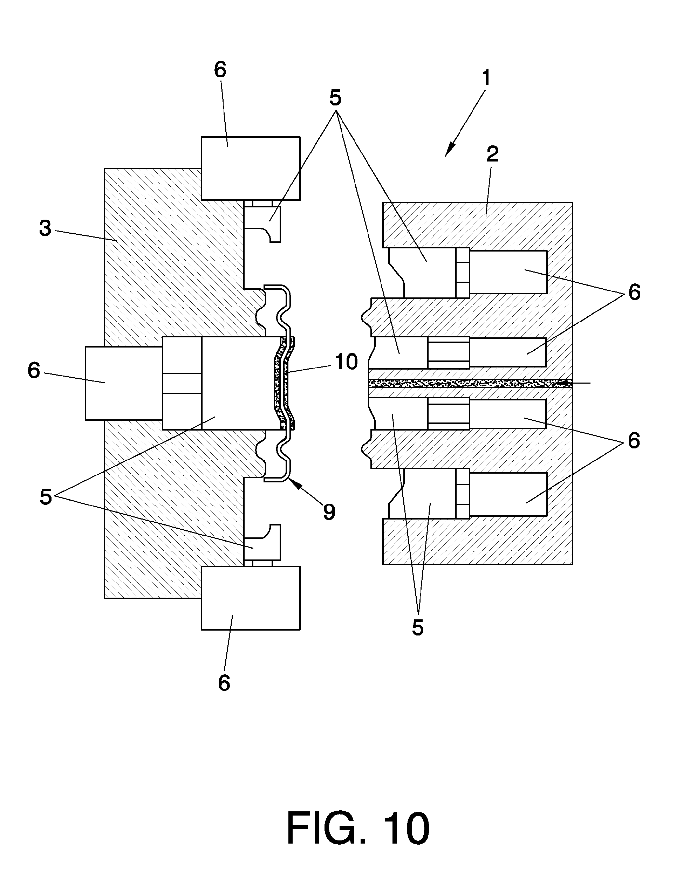

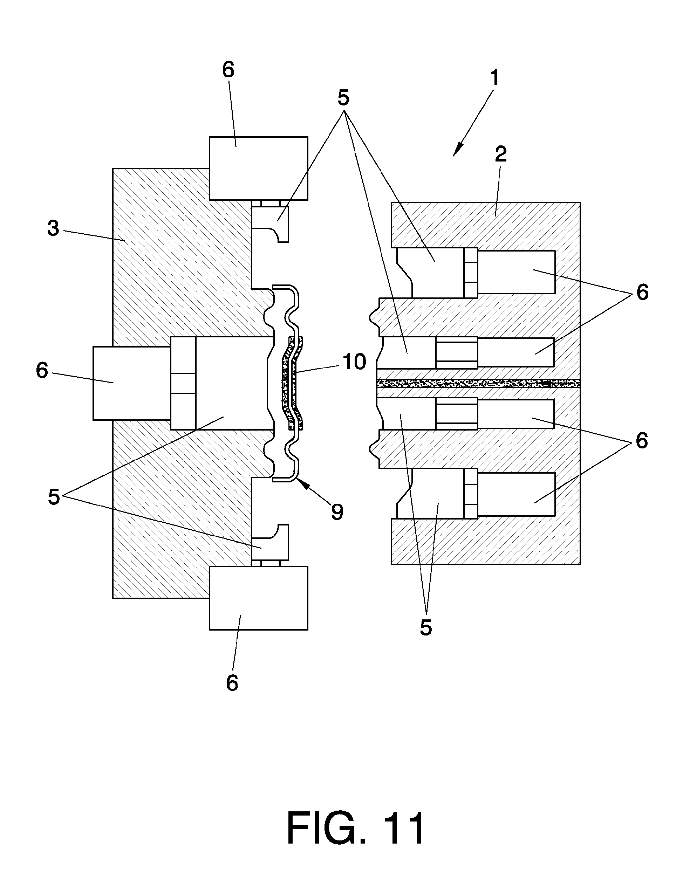

After step f), the method comprises a step g) which comprises opening the injection mold (1) by means of operating the hydraulic closing piston of the injection machine, as has been depicted in Figure 9, in order to then, in a step h), expel the end part (9) already obtained from the injection mold (1), for example by any conventional means such as by the thrust of a movable element (5), as has been depicted in Figures 10 and 11, by means of expelling rods, or any other equivalent means.

A second aspect of the invention relates to a device for obtaining parts, in which to perform the method of the invention, for which the device comprises an injection machine comprising an injection mold (1) such as the one described above.

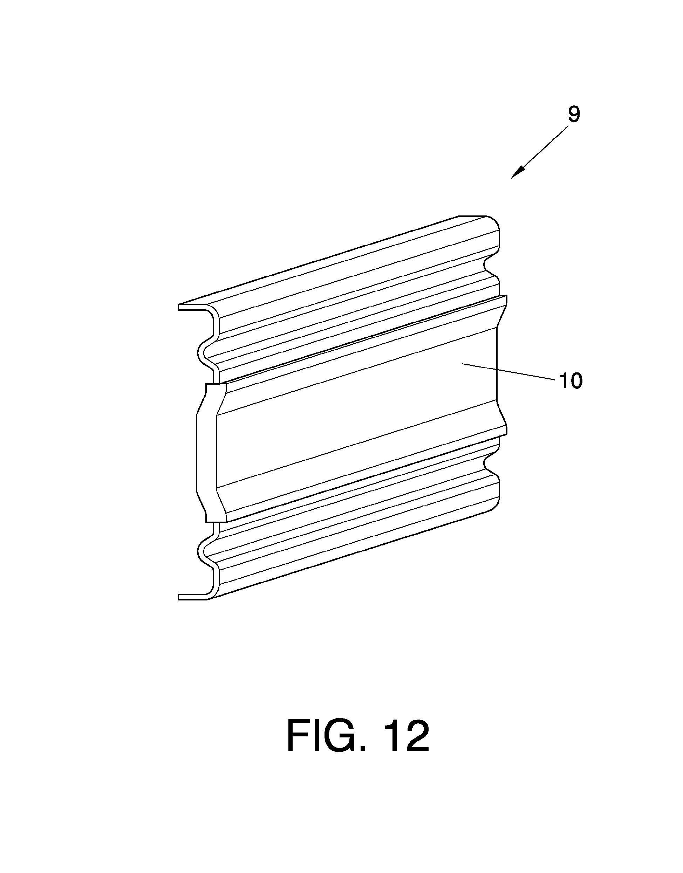

Finally, a third aspect of the invention relates to a part obtained by means of the method described above, such that said end part (9) is made of shaped sheet metal and comprises at least one overmolded portion (10) with a plastic material, as can be seen in Figure 12.

In view of this description and set of drawings, the person skilled in the art will understand that the embodiments of the invention which have been described can be combined in many ways within the object of the invention. The invention has been described according to several preferred embodiments thereof, but for the person skilled in the art it will be evident that multiple variations can be introduced in said preferred embodiments without exceeding the object of the claimed invention.

## Claims

1. Method for obtaining parts, comprising the following sequential steps:
- step a) which comprises placing sheet metal (4) in an injection mold (1) of an injection machine, in which said injection mold (1) comprises a fixed portion (2) and a mobile portion (3) which can move operated by a piston of the injection machine, in which said fixed portion (2) and mobile portion (3) are separated such that the injection mold (1) is open,
- step b) which comprises closing the injection mold (1) by means of moving the mobile portion (3) closer to the fixed portion (2), causing the shaping of the sheet metal (4),
**characterized in that** it additionally comprises the following sequential steps:
- step e) which comprises creating at least one free space (7) in contact with a face of the sheet metal (4) by means of the separation with respect to the sheet metal (4) of at least one movable element (5) comprised in the injection mold (1), and
- step f) which comprises injecting a plastic material into said at least one space (7) through an injection channel (8) comprised in the injection mold (1), an end part (9) of shaped sheet metal comprising at least one overmolded portion (10) with a plastic material being obtained.

2. Method for obtaining parts according to claim 1, which, after step b) and before step e), comprises a step c) which comprises folding at least one area of the sheet metal (4) by means of the action of at least one movable element (5).

3. Device for obtaining parts, comprising:
- an injection machine comprising an injection mold (1) comprising a fixed portion (2) and a mobile portion (3) which can move operated by a piston of the injection machine, in which said fixed portion (2) and mobile portion (3) can be separated, such that the injection mold (1) is open, and alternatively moved close together, such that the injection mold (1) is closed and can cause the shaping of sheet metal (4),
**characterized in that** said injection mold (1) comprises:
- at least one movable element (5) which can be separated with respect to the shaped sheet metal (4), creating at least one free space (7) in contact with a face of said sheet metal (4), and
- at least one injection channel (8) through which a plastic material can be injected into said at least one space (7), an end part (9) of shaped sheet metal comprising at least one overmolded portion (10) with a plastic material being obtained.

4. Part obtained by means of a method according to any of claims 1 and 2, **characterized in that** it consists of an end part (9) of shaped sheet metal comprising at least one overmolded portion (10) with a plastic material.
